(19) Europäisches Patentamt
European Patent Office
Office européen des brevets

(11) **EP 3 411 162 B1**

(12) **EUROPÄISCHE PATENTSCHRIFT**

(45) Veröffentlichungstag und Bekanntmachung des Hinweises auf die Patenterteilung:
**24.07.2024 Patentblatt 2024/30**

(21) Anmeldenummer: **16806151.3**

(22) Anmeldetag: **07.12.2016**

(51) Internationale Patentklassifikation (IPC):
**B21B 37/68** *(2006.01)*

(52) Gemeinsame Patentklassifikation (CPC):
**B21B 37/68; B21B 38/00;** B21B 2271/025; B21B 2273/14

(86) Internationale Anmeldenummer:
**PCT/EP2016/080040**

(87) Internationale Veröffentlichungsnummer:
**WO 2017/133814 (10.08.2017 Gazette 2017/32)**

(54) **MODELLPRÄDIKTIVE BANDLAGEREGELUNG**

STRIP POSITION CONTROL

REGLAGE DE POSITION DE BANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.02.2016 EP 16154225**

(43) Veröffentlichungstag der Anmeldung:
**12.12.2018 Patentblatt 2018/50**

(73) Patentinhaber: **Primetals Technologies Germany GmbH**
**91052 Erlangen (DE)**

(72) Erfinder:
• **GAFUR, Ilhom**
**90419 Nürnberg (DE)**
• **GALKINA, Anastasiia**
**4040 Linz (AT)**
• **SCHLACHER, Kurt**
**4040 Linz (AT)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
WO-A1-2005/072886 DE-A1- 102005 051 053
DE-A1- 102014 007 381 DE-B4- 19 704 337
JP-A- S60 148 614

**Beschreibung**

Die vorliegende Erfindung geht aus von einem Betriebsverfahren für eine Walzstraße, in der ein Metallband gewalzt wird,

- wobei die Walzstraße mindestens ein Walzgerüst und eine dem Walzgerüst nachgeordnete Einrichtung aufweist,
- wobei während des Auslaufens des Bandkopfes aus dem Walzgerüst ein Bandlageregler eine mittels einer Erfassungseinrichtung an mindestens einem zwischen dem Walzgerüst und der nachgeordneten Einrichtung liegenden Erfassungsort erfasste seitliche Lage des Bandkopfes entgegennimmt.

Die vorliegende Erfindung geht weiterhin aus von einem Computerprogramm, das Maschinencode umfasst, der von einer Steuereinrichtung für eine Walzstraße abarbeitbar ist, wobei die Abarbeitung des Maschinencodes durch die Steuereinrichtung bewirkt, dass die Steuereinrichtung die Walzstraße gemäß einem derartigen Betriebsverfahren betreibt.

Die vorliegende Erfindung geht weiterhin aus von einer Steuereinrichtung für eine Walzstraße, wobei die Steuereinrichtung mit einem derartigen Computerprogramm programmiert ist, so dass die Steuereinrichtung die Walzstraße gemäß einem derartigen Betriebsverfahren betreibt.

Die vorliegende Erfindung geht weiterhin aus von einer Walzstraße zum Walzen eines Metallbandes,

- wobei die Walzstraße zumindest ein Walzgerüst und eine dem Walzgerüst nachgeordnete Einrichtung aufweist,
- wobei die Walzstraße eine Erfassungseinrichtung aufweist, von der während des Auslaufens eines Bandkopfes des Metallbandes aus dem Walzgerüst an mindestens einem zwischen dem Walzgerüst und der nachgeordneten Einrichtung liegenden Ort eine seitliche Lage des Bandkopfes erfassbar ist,
- wobei die Walzstraße eine Steuereinrichtung aufweist, welche die Walzstraße gemäß einem derartigen Betriebsverfahren betreibt.

Ein Betriebsverfahren und eine Steuereinrichtung der eingangs genannten Art sowie die entsprechende Walzstraße sind beispielsweise aus der DE 197 04 337 B4, der JP S60 148 614 A oder der DE 10 2005 051 053 A1 bekannt. Im Rahmen dieser Betriebsverfahren ist ein Bandlageregler vorhanden, der ausgehend von der entgegengenommenen seitlichen Lage des Bandkopfes einen Stellbefehl ermittelt und das Walzgerüst mit dem Stellbefehl beaufschlagt.

In der DE 10 2014 007 381 A1 ist in Verbindung mit einer Planheitsregelung beiläufig erwähnt, dass eine derartige Regelung mittels eines modellprädiktiven Reglers implementiert werden kann.

Aus der WO 2005/072 886 A1 ist ein Regelverfahren für ein Walzgerüst bekannt, bei dem ein Regler aufgrund einer integrierten, modellprädiktiven Dicken-, Zug- und Planheitsregelung mindestens ein Stellsignal für mindestens eine Stellgrö-ße des Walzgerüsts erzeugt.

Beim Walzen von Metallband in einer Warmband-Fertigstraße soll das Metallband nach Möglichkeit mit höchster Laufstabilität und mit einem optimalen Planheitsergebnis durch die einzelnen Walzgerüste der Walzstraße geführt werden. Zu diesem Zweck ist insbesondere anzustreben, das Metallband mittig und gerade durch die einzelnen Walzgerüste der Walzstraße zu führen. Dies gilt auch und insbesondere in der Einfädelphase des Metallbandes, wenn also der Anfang des Metallbandes (= Bandkopf) bereits aus einem der Walzgerüste ausgetreten ist und dem nächsten Walzgerüst oder einer anderen nachgeordneten Einrichtung (insbesondere einem Haspel) zustrebt.

Erfolgt in dem Walzgerüst in der Einfädelphase eine asymmetrische Verformung (wird das Metallband also mit einem Dickenkeil beaufschlagt), läuft das Metallband nicht gerade, sondern in einem Kreisbogen (in Fachkreisen auch Säbel genannt) auf das nächste Walzgerüst bzw. allgemein die nachgeordnete Einrichtung zu. Das Metallband trifft daher außermittig bei der nachgeordneten Einrichtung ein.

Das seitliche Auswandern wird bei einem zu großen Betrag entweder durch ein einseitiges Schleifen an einer Seitenführung begrenzt oder spielt sich schlangenförmig innerhalb der beiden Seitenführungen ab. Ein einseitiges Schleifen beschädigt die Bandkanten. Ein schlangenförmiges Wandern führt wegen der unkontrollierten seitlichen Bandbewegung zu einem außermittigen Anstechen im nachfolgenden Walzgerüst und dadurch zu Planheitsfehlern. Im Extremfall kann der Bandkopf den Walzspalt des nachfolgenden Walzgerüsts komplett verpassen oder gedoppelt in den Walzspalt des nachfolgenden Walzgerüsts einlaufen. Beides führt zu negativen Ergebnissen. Im Extremfall ist es möglich, dass das aktuelle Metallband nur noch als Schrott verwertet werden kann oder dass - beispielsweise durch einen sogenannten Hochgeher - sogar die Walzstraße beschädigt wird.

Im Stand der Technik werden die Seitenführungen üblicherweise eng eingestellt, um dem Metallband nur einen geringen seitlichen Bewegungsspielraum zu lassen. Dies hat zur Folge, dass die Bandkanten durch die Seitenführungen abgeschliffen werden und dass das Band in sich verspannt wird.

Steuerleute versuchen in der Praxis, durch schnelle Korrekturen der Schräglage der Arbeitswalzen den Geradeauslauf des Bandkopfes auf Sicht zu beeinflussen. Diese Tätigkeit ist sehr anspruchsvoll und erfordert große Erfahrung.

Darüber hinaus gelingt dies sogar erfahrenen Steuerleuten oftmals nur eingeschränkt, da die Sicht von der Steuerbühne auf das Metallband aus einem ungünstigen Winkel erfolgt. Auch beeinträchtigen oftmals Dampf und Staub die Sicht. Weiterhin sind nur Ausschnitte des Metallbandes zwischen den Walzgerüsten sichtbar. Darüber hinaus ist bei den hinteren Walzgerüsten der Walzstraße aufgrund der hohen Transportgeschwindigkeiten eine sehr schnelle Reaktion erforderlich.

Die aus der DE 197 04 337 B4 bekannte Vorgehensweise führt vom Ansatz her bereits zu guten Ergebnissen. Die aus der DE 197 04 337 B4 bekannte Vorgehensweise ist jedoch noch nicht optimal.

Bei der JP S60 148 614 A wird die Abweichung der Position des Walzguts relativ zu einer Mittelposition mit einem Proportionalitätsfaktor gewichtet. Die Abweichung wird ferner zeitlich differenziert. Die zeitlich differenzierte Abweichung wird mit einem Faktor multipliziert, der indirekt proportional zur aktuellen Walzgeschwindigkeit ist. Auch diese Vorgehensweise ist noch nicht optimal.

Aus der US 2010/0 269 556 A1 ist ein Verfahren zur Regelung der seitlichen Bandlage in einer Walzstraße mit mehreren Walzgerüsten bekannt, bei dem die Schräglagen der Arbeitswalzen in den Walzgerüsten einen Vektor bilden. Der Vektor wird aus dem Produkt einer quadratischen Matrix mit einem Vektor der ausgangsseitig der Walzgerüste erfassten Abweichungen der Bandlage von einer jeweiligen Solllage ermittelt. Die Regelverstärkung der US 2010/0 269 556 A1 ist also nicht eine skalare Größe, sondern eine Verstärkungsmatrix. In der Veröffentlichung "Steering Control at Arcelor Eko Stahl finishing HSM", erschienen in Steel Times International, Mai/Juni 2007 wird beschrieben, dass die Bestimmung der Koeffizienten der quadratischen Matrix durch Modellrechnung, Simulation und viele Tests auf einer realen Anlage erfolgt. Diese Vorgehensweise ist sehr aufwändig und erlaubt keine schnelle Inbetriebnahme.

In der Promotionsschrift "Adaptive Fuzzy Logic Steering Controller for a Steckel Mill" von Arno Barry Samuel Ferreira, November 2005, wird für ein Walzgerüst ein von Steuerleuten trainierter, adaptiver Fuzzy Logic Controller entworfen, der auf die Abweichung der Bandlage von einem Sollwert reagiert und auf den Schräglagesollwert der Arbeitswalzen wirkt. Die initiale Regelbasis der Fuzzy Logic wird durch Befragung der Steuerleute abhängig von wichtigen weiteren Größen und Walzparametern wie beispielsweise Differenzwalzkraft, Materialhärte, Eintrittsbanddicke, Bandbreite und Walzgeschwindigkeit ermittelt. Diese Vorgehensweise erfordert viel Erfahrung, ist sehr unscharf und erlaubt keine schnelle Inbetriebnahme.

In der Veröffentlichung "Sensor-type Automatic Steering Control System for Rolling Mill" von Hiroaki Kuwano und Norio Takahashi wird auf Basis eines einfachen Gerüst- und Bandmodells ein PD-Regler mit der Abweichung der Bandlage als Eingangsgröße und einem Schräglagensollwert als Ausgangsgröße entworfen. Die Reglerparameter des PD-Reglers werden gemäß einer theoretischen Stabilitätsbetrachtung als Konstanten ausgelegt. Dieser Entwurf kann nur in einem einzelnen Arbeitspunkt optimal sein.

In der Veröffentlichung "State Feedback Control of the Strip Steering for Aluminium Hot Rolling Mills" von Y. Okamura und I. Koshino, IFAC 1996, werden ebenfalls auf Basis eines einfachen Gerüst- und Bandmodells ein Zustandsregler mit Zustandsbeobachter für die Differenzwalzkraft und ein überlagerter Integralregler für die Abweichung der Bandlage vorgeschlagen. Als Stellgröße dient ebenfalls die Schräglage der Arbeitswalzen.

Die Aufgabe der vorliegenden Erfindung besteht darin, Möglichkeiten zu schaffen, die Bandlage schnell und zuverlässig einstellen zu können.

Die Aufgabe wird durch ein Betriebsverfahren für eine Walzstraße mit den Merkmalen des Anspruchs 1 gelöst. Vorteilhafte Ausgestaltungen des Betriebsverfahrens sind Gegenstand der abhängigen Ansprüche 2 bis 6.

Erfindungsgemäß wird ein Betriebsverfahren der eingangs genannten Art dadurch ausgestaltet,

- dass der Bandlageregler als modellprädiktiver Regler ausgebildet ist, der basierend auf der entgegengenommenen seitlichen Lage des Bandkopfes eine Sequenz von mit einem Arbeitstakt nacheinander auszugebenden Stellbefehlen ermittelt, mittels derer jeweils ein Walzspaltkeil eingestellt wird,
- dass die Anzahl an Stellbefehlen in Verbindung mit dem Arbeitstakt einen Prädiktionshorizont des Bandlagereglers definiert,
- dass der Bandlageregler das Walzgerüst zumindest mit dem als nächstes auszugebenden ermittelten Stellbefehl beaufschlagt,
- dass der Bandlageregler zur Ermittlung der Sequenz von auszugebenden Stellbefehlen

    -- zunächst eine Sequenz von vorläufigen Stellbefehlen ansetzt, mittels derer jeweils ein Walzspaltkeil eingestellt wird,
    -- ausgehend von der entgegengenommenen seitlichen Lage des Bandkopfes anhand eines Modells der Walzstraße für die angesetzten Stellbefehle jeweils den bei einer Ausführung der angesetzten Stellbefehle bis zum jeweils betrachteten Stellbefehl erwarteten Abstand des Bandkopfes vom Walzgerüst und die bei der Ausführung der angesetzten Stellbefehle bis zum jeweils betrachteten Stellbefehl erwartete seitliche Lage des Bandkopfes ermittelt und
    -- die angesetzten Stellbefehle gemäß einem Optimierungskriterium optimiert und so die auszugebenden Stellbefehle ermittelt und

- dass der Bandlageregler die Stellbefehle im Rahmen der Optimierung derart ermittelt, dass innerhalb des Prädiktionshorizontes der Walzspaltkeil einen vorgegebenen maximalen Walzspaltkeil nicht überschreitet, die Abweichung der seitlichen Lage des Bandkopfes von einer Solllage eine vorgegebene maximale Abweichung nicht überschreitet und eine Gütefunktion der Form

$$K = \alpha 1 \cdot \varepsilon + \alpha 2 \cdot \sum_{k=1}^{n} \left\| u_k - u_{k-1} \right\| + \alpha 3 \cdot \sum_{k=1}^{n} \left\| y - y_k \right\|$$

minimiert wird, wobei K die Gütefunktion ist, $\alpha 1$ bis $\alpha 3$ nicht negative, reelle Wichtungsfaktoren sind, wobei von den Wichtungsfaktoren $\alpha 1$ und $\alpha 2$ mindestens einer größer als 0 ist, wobei $u_k$ der k-te Stellbefehl ist und $\varepsilon$ ein Strafterm ist, mittels dessen ein Überschreiten einer vorgegebenen maximalen Änderung des Walzspaltkeils von Stellbefehl zu Stellbefehl bestraft wird.

Aufgrund des Umstands, dass eine Sequenz ermittelt wird, ist die Anzahl an Stellbefehlen somit mindestens zwei. Wenn mit n+1 die Anzahl an Stellbefehlen bezeichnet wird, ist somit n eine von 0 verschiedene natürliche Zahl. n kann den Wert 1 oder einen anderen Wert größer als 1 aufweisen. Wenn mit T der Arbeitstakt bezeichnet wird, ergibt sich der Prädiktionshorizont somit zu nT. Durch die erfindungsgemäße Vorgehensweise kann somit ein überlegenes Regelverhalten erzielt werden, das - innerhalb des Prädiktionshorizontes - auch zukünftige erwartete Stelleingriffe berücksichtigt.

Modellprädiktive Regler als solche sind bekannt. Rein beispielhaft kann auf die deutsche Wikipedia, Eintrag "Model Predictive Control", abgerufen am 30.08.2016, verwiesen werden.

Die generische Eigenschaft eines modellprädiktiven Reglers - also die Eigenschaft, aufgrund derer der Regler modellprädiktiv ist - besteht allgemein gesprochen darin, dass er anhand des erfassten, der Regelung zu Grunde liegenden Istwertes nicht nur einen (1) Stellbefehl für ein Stellglied ermittelt, sondern dass er

- für den Prädiktionshorizont eine (vollständige) Sequenz von Stellbefehlen ansetzt,
- modellgestützt jeweils das erwartete Verhalten des betrachteten Systems für die Stellbefehle der angesetzten Sequenz ermittelt und
- dann die angesetzten Stellbefehle insgesamt - nicht nur den als nächstes auszugebenden Stellbefehl - gemäß einem Optimierungskriterium optimiert.

Dieses Verhalten des Reglers ist also die Eigenschaft, aufgrund derer der Regler überhaupt erst zu einem modellprädiktiven Regler wird. Der als nächstes auszugebende optimierte Stellbefehl wird dann für die Ansteuerung des Stellgliedes verwendet.

Durch die erfindungsgemäße Ausgestaltung können insbesondere abrupte Änderungen des Walzspaltkeils und damit abrupte Änderungen des Dickenkeils im gewalzten Band vermieden werden. Dennoch kann ein seitliches Auswandern des Bandkopfes zuverlässig vermieden bzw. zumindest begrenzt werden.

Vorzugsweise berücksichtigt der Bandlageregler bei der Ermittlung der Stellbefehle als zusätzliche Randbedingung, dass die Abweichung der seitlichen Lage des Bandkopfes von der Solllage am Ende des Prädiktionshorizontes innerhalb einer zulässigen Endabweichung liegt. Dadurch kann gewährleistet werden, dass der Bandkopf mit einer Abweichung innerhalb der zulässigen Endabweichung (d.h. nahezu mittig oder sogar exakt mittig) in die nachgeordnete Einrichtung einläuft. Insbesondere in dem üblichen Fall, in dem die nachgeordnete Einrichtung ebenfalls ein Walzgerüst ist, wird dadurch das Anstechen des Metallbandes in diesem Walzgerüst erleichtert. Weiterhin kann dadurch gewährleistet werden, dass das Metallband aus der nachgeordneten Einrichtung nahezu mittig oder sogar exakt mittig ausläuft.

Alternativ oder zusätzlich berücksichtigt der Bandlageregler bei der Ermittlung der Stellbefehle, dass eine Änderung der seitlichen Lage des Bandkopfes am Ende des Prädiktionshorizontes innerhalb einer zulässigen Endänderung liegt. Dadurch kann gewährleistet werden, dass der Bandkopf mit einer Seitenbewegung innerhalb der zulässigen Endänderung (d.h. nahezu ohne Querbewegung oder sogar exakt ohne Querbewegung) in die nachgeordnete Einrichtung einläuft. Insbesondere in dem üblichen Fall, in dem die nachgeordnete Einrichtung ebenfalls ein Walzgerüst ist, wird dadurch das Anstechen des Metallbandes in diesem Walzgerüst erleichtert. Weiterhin kann dadurch gewährleistet werden, dass das Metallband aus der nachgeordneten Einrichtung zumindest nahezu ohne Querbewegung ausläuft.

In vielen Fällen erfolgt bei einer modellprädiktiven Regelung mit jedem Arbeitstakt die Erfassung eines neuen Istwertes. In diesem Fall wird auch mit jedem Arbeitstakt jeweils die Sequenz von Stellbefehlen angesetzt und optimiert. Im Rahmen der vorliegenden Erfindung kann es jedoch geschehen, dass die Erfassung von weiteren Istwerten nicht möglich ist. Das erfindungsgemäße Betriebsverfahren ist daher vorzugsweise derart ausgestaltet, dass der Bandlageregler das Walzgerüst nacheinander mit dem Arbeitstakt auch mit den weiteren auszugebenden Stellbefehlen beaufschlagt, bis entweder alle auszugebenden Stellbefehle ausgegeben sind oder der Bandlageregler, basierend auf einem erneuten Entgegennehmen der seitlichen Lage des Bandkopfes erneut eine Sequenz von Stellbefehlen ermittelt.

Die erneute Ermittlung einer Sequenz von Stellbefehlen hat in der Regel Vorrang vor dem Ausgeben der bereits ermittelten weiteren Stellbefehle. Das Ausgeben der bereits ermittelten weiteren Stellbefehle erfolgt also in der Regel nur dann, wenn eine erneute Erfassung der seitlichen Lage des Bandkopfes nicht möglich ist.

Vorzugsweise erstreckt sich der Prädiktionshorizont bis zum Fördern des Bandkopfes zur nachgeordneten Einrichtung. Dadurch kann ein ordnungsgemäßes Einlaufen in die nachgeordnete Einrichtung besonders zuverlässig gewährleistet werden.

In einer weiteren bevorzugten Ausgestaltung ermittelt der Bandlageregler die seitliche Lage des Bandkopfes gemäß den Beziehungen

$$\dot{x} = v - \lambda \cdot y \cdot v \qquad \text{und} \qquad (1)$$

$$\dot{y} = \lambda \cdot x \cdot v \qquad (2)$$

mit $\lambda = \lambda 0 + \lambda 1 u$, wobei

- x ein Abstand des Bandkopfes von dem Walzgerüst,
- y die seitliche Lage des Bandkopfes,
- $\lambda 0$ eine durch das Metallband als solches hervorgerufene Krümmung des Metallbandes,
- $\lambda 1$ eine Wirksamkeit des jeweiligen Stellbefehls,
- v eine Geschwindigkeit, mit der das Metallband aus dem Walzgerüst ausläuft, und
- u der jeweilige Stellbefehl sind.

Diese Modellierung führt zu besonders guten Ergebnissen.

Vorzugsweise ist vorgesehen, dass der Bandlageregler nach dem Beaufschlagen des Walzgerüsts mit einer Anzahl von Stellbefehlen die seitliche Lage des Bandkopfes erneut entgegennimmt und die durch das Metallband als solches hervorgerufene Krümmung des Metallbandes und die Wirksamkeit der Stellbefehle, mit denen das Walzgerüst beaufschlagt wird, anhand eines Vergleichs der neu entgegengenommenen seitlichen Lage des Bandkopfes mit einer erwarteten seitlichen Lage des Bandkopfes nachführt. Die erwartete seitliche Lage des Bandkopfes ist hierbei diejenige Lage, die im Rahmen der Ermittlung der Stellbefehle nach demjenigen Stellbefehl erwartet wird, mit dem das Walzgerüst zuletzt beaufschlagt wurde.

Durch diese Ausgestaltung kann insbesondere von Metallband zu Metallband eine Adaption des Bandlagereglers erfolgen. Unter Umständen kann die Adaption des Bandlagereglers sogar innerhalb des Walzens eines Metallbandes erfolgen.

Vorzugsweise verwendet der Bandlageregler zum Nachführen der durch das Metallband als solches hervorgerufenen Krümmung des Metallbandes und der Wirksamkeit der Stellbefehle, mit denen das Walzgerüst beaufschlagt wird, einen Kalman-Filter. Durch diese Ausgestaltung kann insbesondere eine robuste, stabile, von Rauschen der erfassten seitlichen Lagen kaum beeinflusste Nachführung erfolgen.

Es ist möglich, dass die seitliche Lage des Bandkopfes nur einmalig (punktuell) erfasst wird und hierauf aufbauend die zukünftig auszugebenden Stellbefehle ermittelt werden. In diesem Fall werden die Stellbefehle einmalig ermittelt und sequenziell nacheinander ausgegeben. Vorzugsweise wird die Lage des Bandkopfes jedoch wiederholt erfasst. In diesem Fall sind nur die zuletzt ermittelten Stellbefehle gültig. Zuvor ermittelte Stellbefehle, also Stellbefehle die basierend auf einer früher erfassten zeitlichen Lage des Bandkopfes ermittelt wurden, verlieren ihre Gültigkeit.

Die wiederholte Erfassung der Lage des Bandkopfes ist insbesondere dann möglich, wenn die Lage des Bandkopfes mittels der Erfassungseinrichtung in einem flächigen Bereich erfasst wird. Ein Beispiel einer derartigen Erfassungseinrichtung ist eine Kamera.

In Transportrichtung vom Walzgerüst zur nachgeordneten Einrichtung gesehen sollte der flächige Bereich eine möglichst große Erstreckung aufweisen. Insbesondere sollte die Erstreckung mindestens 20 % eines Abstands des Walzgerüsts von der nachgeordneten Einrichtung betragen. Beispielsweise kann bei einem (typischen) Abstand der nachgeordneten Einrichtung vom Walzgerüst von ca. 5,5 m die Erstreckung ca. 1,60 m (entspricht knapp 30 %) oder mehr betragen.

Die Aufgabe wird weiterhin durch ein Computerprogramm mit den Merkmalen des Anspruchs 7 gelöst. Erfindungsgemäß bewirkt die Abarbeitung des Computerprogramms, dass die Steuereinrichtung die Walzstraße gemäß einem erfindungsgemäßen Betriebsverfahren betreibt.

Die Aufgabe wird weiterhin durch eine Steuereinrichtung für eine Walzstraße mit den Merkmalen des Anspruchs 8 gelöst.

Erfindungsgemäß ist die Steuereinrichtung mit einem erfindungsgemäßen Computerprogramm programmiert, so dass die Steuereinrichtung die Walzstraße gemäß einem erfindungsgemäßen Betriebsverfahren betreibt.

Die Aufgabe wird weiterhin durch eine Walzstraße mit den Merkmalen des Anspruchs 9 gelöst. Erfindungsgemäß betreibt die Steuereinrichtung die Walzstraße jeweils gemäß einem erfindungsgemäßen Betriebsverfahren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    eine Walzstraße mit mehreren Walzgerüsten,
FIG 2    zwei Walzgerüste der Walzstraße in perspektivischer Ansicht,
FIG 3    die zwei Walzgerüste der Walzstraße von FIG 2 von oben,
FIG 4    ein Walzgerüst und
FIG 5    einen modellprädiktiven Regler mit einem Modell des Walzgerüsts.

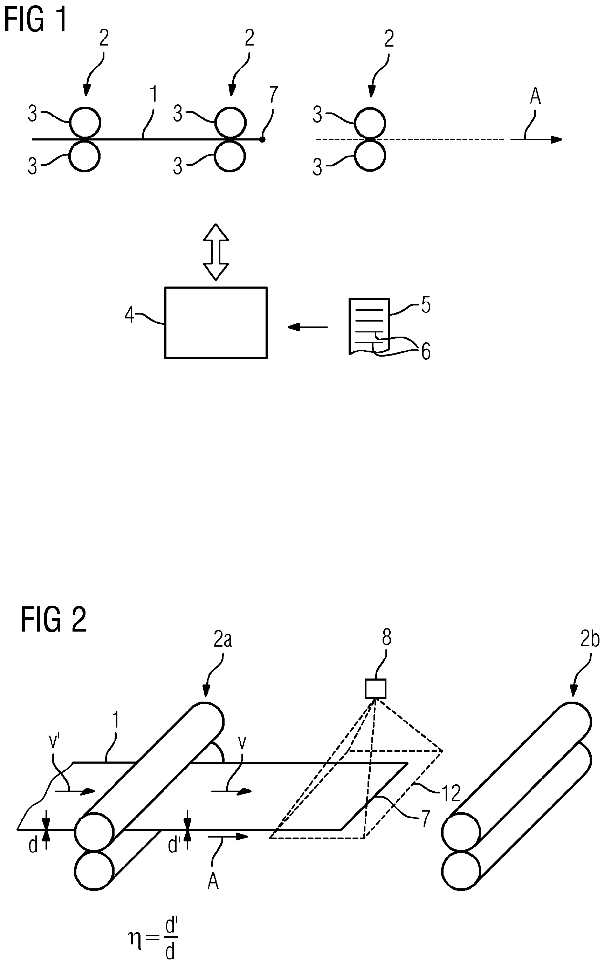

Gemäß FIG 1 soll in einer Walzstraße ein Metallband 1 gewalzt werden. Das Metallband 1 wird in einer Transportrichtung A durch die Walzstraße gefördert. Das Metallband 1 kann beispielsweise ein Stahlband, ein Aluminiumband, ein Kupferband, ein Messingband oder ein aus einem anderen Metall bestehendes Band sein. Die Walzstraße weist mehrere Walzgerüste 2 auf. Die Anzahl an Walzgerüsten 2 liegt in der Regel zwischen vier und acht, beispielsweise bei fünf, sechs oder sieben. Von den Walzgerüsten 2 sind in FIG 1 (und auch in den anderen FIG) nur deren Arbeitswalzen 3 dargestellt. In der Regel weisen die Walzgerüste 2 jedoch zusätzlich zu den Arbeitswalzen 3 weitere Walzen auf, insbesondere bei Quartogerüsten zusätzlich zu den Arbeitswalzen 3 Stützwalzen und bei Sextogerüsten zusätzlich zu den Arbeitswalzen 3 Stützwalzen und Zwischenwalzen. Die Arbeitswalzen 3, die Zwischenwalzen und/oder die Stützwalzen können axial verschiebbar sein. Dies ist jedoch nicht zwingend erforderlich. Hinter dem letzten Walzgerüst 2 ist oftmals ein Haspel (in den FIG nicht dargestellt) vorhanden.

Die Walzstraße wird von einer Steuereinrichtung 4 gesteuert. Die Steuereinrichtung 4 steuert in der Regel die gesamte Walzstraße. Sie ist also nur einmal für alle Walzgerüste 2 der Walzstraße vorhanden. Eine Parametrierung der Steuereinrichtung 4 bezüglich der einzelnen Walzgerüste 2 kann jedoch von Walzgerüst 2 zu Walzgerüst 2 verschieden sein.

Die Steuereinrichtung 4 ist in der Regel als softwareprogrammierbare Steuereinrichtung 4 ausgebildet. Sie ist daher mit einem Computerprogramm 5 programmiert. Das Computerprogramm 5 bestimmt die Wirkungsweise der Steuereinrichtung 4. Das Computerprogramm 5 umfasst Maschinencode 6, der von der Steuereinrichtung 4 abarbeitbar ist. Die Abarbeitung des Maschinencodes 6 bewirkt, dass die Steuereinrichtung 4 die Walzstraße gemäß einem Betriebsverfahren betreibt, das nachfolgend in Verbindung mit den weiteren FIG näher erläutert wird.

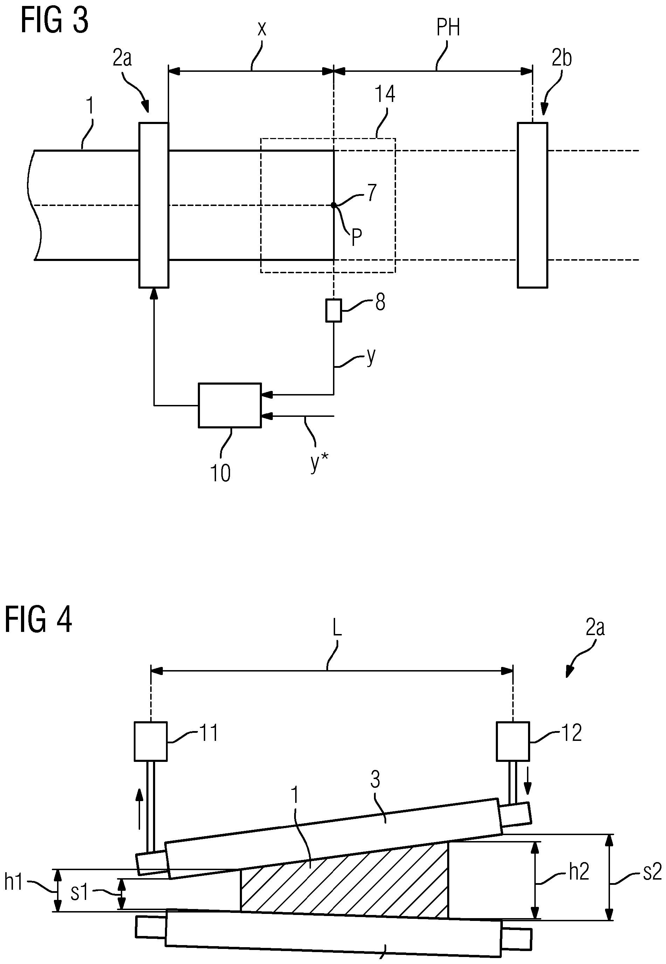

Die nachfolgend näher erläuterte erfindungsgemäße Vorgehensweise wird weiterhin in der Regel für jedes Walzgerüst 2 ergriffen. Nachfolgend wird daher in Verbindung mit den FIG 2 und 3 und auch den weiteren FIG nur ein einzelnes Paar von Walzgerüsten 2 betrachtet. Die entsprechenden Ausführungen gelten jedoch für jede derartige Gruppe von zwei in Transportrichtung A des Metallbandes 1 unmittelbar aufeinanderfolgenden Walzgerüsten 2. Die Ausführungen gelten weiterhin auch für das letzte Walzgerüst 2 der Walzstraße, also für dasjenige Walzgerüst 2, dem nicht ein weiteres Walzgerüst 2, sondern eine andere Einrichtung nachgeordnet ist, beispielsweise der eingangs erwähnte Haspel.

Das vordere Walzgerüst 2 von FIG 2 und 3, d.h. dasjenige Walzgerüst, aus dem das Metallband 1 ausläuft, ist das relevante Walzgerüst 2. Das hintere Walzgerüst 2 entspricht der nachgeordneten Einrichtung. Bezüglich des hinteren Walzgerüsts 2 kommt es nur darauf an, dass das Metallband 1 zu dem hinteren Walzgerüst 2 geführt wird. Anstelle des hinteren Walzgerüsts 2 könnte auch ein Haspel oder eine andere Einrichtung vorhanden sein. Nachstehend werden daher für das vordere Walzgerüst 2 die Bezeichnung "Walzgerüst" und das Bezugszeichen 2a verwendet. Für das hintere Walzgerüst 2 werden die Bezeichnung "nachgeordnete Einrichtung" und das Bezugszeichen 2b verwendet.

Von Bedeutung ist weiterhin, dass der Bandkopf 7 des Metallbandes 1, d.h. der Anfang des Metallbandes 1, zwar bereits aus dem Walzgerüst 2a ausgelaufen ist, die nachgeordnete Einrichtung 2b jedoch noch nicht erreicht hat. Dieser Zustand wird üblicherweise und auch nachfolgend als Auslaufen des Bandkopfes 7 aus dem Walzgerüst 2a bezeichnet.

Während des Auslaufens des Bandkopfes 7 aus dem Walzgerüst 2a wird mittels einer Erfassungseinrichtung 8 an mindestens einem Erfassungsort eine seitliche Lage y des Bandkopfes 7 erfasst. Der Erfassungsort liegt gemäß den FIG 2 und 3 zwischen dem Walzgerüst 2a und der nachgeordneten Einrichtung 2b.

Es ist möglich, dass am Erfassungsort direkt die seitliche Lage y des Bandkopfes 7 als solche erfasst wird. Alternativ ist es möglich, dass die seitliche Lage beispielsweise von Bandkanten erfasst wird und die seitliche Lage y des Bandkopfes 7 durch Bilden des Mittelwerts der Lagen der erfassten Bandkanten ermittelt wird.

Die Steuereinrichtung 4 implementiert unter Abarbeitung des Computerprogramms 5 (unter anderem) einen Bandlageregler 10 für das Walzgerüst 2a. Dem Bandlageregler 10 wird die seitliche Lage y zugeführt. Die seitliche Lage y wird von dem Bandlageregler 10 entgegengenommen. Dem Bandlageregler 10 wird weiterhin ein der Abstand x zugeführt, bei dem die seitliche Lage y erfasst wurde. Es ist möglich, dass der Steuereinrichtung 4 der Abstand x vorab bekannt ist oder dass die Steuereinrichtung 4 den Abstand x beispielsweise anhand einer Wegverfolgung ermittelt. Alternativ ist es möglich, dass der Abstand x messtechnisch erfasst wird und dem Bandlageregler 10 als Messsignal zugeführt wird.

Der Bandlageregler 10 ist als modellprädiktiver Regler ausgebildet. Ein derartiger Regler ermittelt innerhalb eines Prädiktionshorizontes PH eine Sequenz von auszugebenden Stellbefehlen $u_k$ (k = 0,...,n). Die Ausgabe der Stellbefehle $u_k$ erfolgt mit einem Arbeitstakt T des Bandlagereglers 10, beispielsweise einem Arbeitstakt T von 10 ms. n weist minimal den Wert 1 und in der Regel einen Wert oberhalb von 1 auf, beispielsweise den Wert 5, 8 oder 10. Auch andere Zahlenwerte sind möglich. Der Zahlenwert n entspricht in Verbindung mit dem Arbeitstakt T gemäß der Beziehung n x T = PH dem Prädiktionshorizont PH. Die Größe des Prädiktionshorizontes PH kann nach Bedarf bestimmt sein. Insbesondere ist es entsprechend der Darstellung in FIG 3 möglich, möglich dass der Prädiktionshorizont PH sich bis zum Fördern des Bandkopfes 7 zur nachgeordneten Einrichtung 2b erstreckt.

Mittels der Stellbefehle $u_k$ wird jeweils ein Walzspaltkeil eingestellt. Die Stellbefehle $u_k$ können insbesondere für eine Differenzwalzkraft oder einen Differenzwalzspalt charakteristisch sein. Insbesondere können die Stellbefehle $u_k$ entsprechend der Darstellung in FIG 4 gegensinnig auf eine bedienseitige Verstelleinrichtung 11 und eine antriebsseitige Verstelleinrichtung 12 wirken. Die Verstelleinrichtungen 11, 12 dienen insbesondere der Einstellung des Walzspaltes des Walzgerüstes 2a. Sie können direkt oder indirekt (beispielsweise über Stützwalzen) auf die Arbeitswalzen 3 wirken. Die Verstelleinrichtungen 11, 12 sind in der Regel als Hydraulikzylindereinheiten ausgebildet.

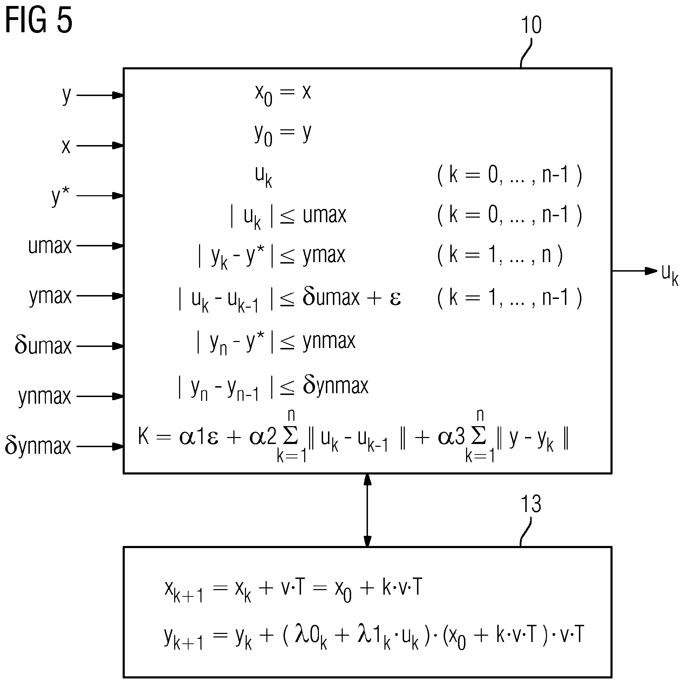

Dem Bandlageregler 10 werden entsprechend der Darstellung in FIG 5 als Variable die erfasste Lage y und als Parameter oder als Variable eine Solllage y* zugeführt. Weiterhin werden dem Bandlageregler 10 als Parameter oder als Variable der Abstand x zugeführt, bei dem die Lage y erfasst wird. Weiterhin werden dem Bandlageregler 10 als Parameter folgende Größen zugeführt.

- Ein maximaler Walzspaltkeil umax,
- eine maximale Abweichung ymax und
- eine maximale Änderung δumax.

Der maximale Walzspaltkeil umax ist durch die Stellgrenzen des Walzgerüsts 2a vorgegeben. Der maximale Walzspaltkeil umax kann beispielsweise im Bereich einiger weniger Millimeter liegen. Die maximale Abweichung ymax ist durch die Abmessungen des Metallbandes 1 in Verbindung mit dem Bereich der nachgeordneten Einrichtung 2b bestimmt, innerhalb dessen das Metallband 1 in die nachgeordnete Einrichtung 2b einlaufen kann. Die maximale Änderung δumax kann einerseits durch die Dynamik der Verstelleinrichtungen 11, 12 und andererseits durch eine entsprechende Qualitätsanforderung an das hergestellte Metallband 1 bestimmt sein.

Optional können dem Bandlageregler 10 weiterhin als zusätzliche Parameter eine zulässige Endabweichung ynmax und/oder eine zulässige Endänderung δynmax zugeführt werden.

Der Bandlageregler 10 ermittelt die Stellbefehle $u_k$. Die Ermittlung erfolgt entsprechend der Darstellung in FIG 5 derart, dass innerhalb des Prädiktionshorizontes PH

- der Walzspaltkeil - das ist im Ergebnis der Betrag der Stellbefehle $u_k$ - den maximalen Walzspaltkeil umax nicht überschreitet und
- die Abweichung der seitlichen Lage y des Bandkopfes 7 von der Solllage y* die maximale Abweichung ymax nicht überschreitet.

Weiterhin minimiert der Bandlageregler 10 eine Gütefunktion K. In die Gütefunktion K können entsprechend der Darstellung in FIG 5 die Änderung des Walzspaltkeils von Stellbefehl $u_k$ zu Stellbefehl $u_k$ und ein Strafterm ε eingehen. Mittels des Strafterms ε wird, wie sich aus der Darstellung in FIG 5 ergibt, ein Überschreiten der maximalen Änderung δumax bestraft. Weiterhin kann in die Gütefunktion K beispielsweise die Verlagerung des Bandkopfes 7, bezogen auf die erfasste Lage y des Bandkopfes 7 eingehen. Erfindungsgemäß weist die Gütefunktion K entsprechend der Darstellung in FIG 5 die Form

$$K = \alpha 1 \cdot \varepsilon + \alpha 2 \cdot \sum_{k=1}^{n} \|u_k - u_{k-1}\| + \alpha 3 \cdot \sum_{k=1}^{n} \|y - y_k\| \qquad (6)$$

auf. $\alpha 1$ bis $\alpha 3$ sind Wichtungsfaktoren, die jeweils einen nicht negativen, reellen Wert aufweisen. Von den Wichtungsfaktoren $\alpha 1$ und $\alpha 2$ ist mindestens einer größer als 0. Der Wichtungsfaktor $\alpha 3$ kann alternativ 0 sein oder einen Wert größer als 0 aufweisen. Die Wichtungsfaktoren $\alpha 1$ bis $\alpha 3$ können fest vorgegeben oder parametrierbar sein.

Der Bandlageregler 10 ermittelt somit, basierend auf einem Modell 13 der Regelstrecke für die Sequenz von Stellbefehlen $u_k$ jeweils die erwartete Lage $y_k$ des Bandkopfes 7. Er überprüft die ermittelten Stellbefehle $u_k$ auf Einhalten der Nebenbedingungen und minimiert durch Variieren der Stellbefehle $u_k$ die Gütefunktion K. Diejenige Sequenz von Stellbefehlen $u_k$, bei denen die Nebenbedingungen erfüllt sind und die Gütefunktion K minimal ist, ist die gültige Sequenz von Stellbefehlen $u_k$. Mit dieser Sequenz beaufschlagt der Bandlageregler 10 das Walzgerüst 2a. Das Beaufschlagen erfolgt entsprechend der Reihenfolge der ermittelten Stellbefehle $u_k$. Zuerst wird also der Stellbefehl $u_0$ ausgegeben, dann der Stellbefehl $u_1$, dann der Stellbefehl $u_2$ usw.

Das Beaufschlagen mit den Stellbefehlen $u_k$ erfolgt, bis - basierend auf einer neuen Erfassung der seitlichen Lage y des Bandkopfes 7 und gegebenenfalls einer neuen Erfassung des zugehörigen Abstandes x vom Walzgerüst 2a - eine neue Prädiktion erfolgen kann. Im optimalen Fall erfolgt mit jedem Arbeitstakt T nicht nur die Ausgabe eines Stellbefehls $u_k$, sondern auch die erneute Erfassung der seitlichen Lage y des Bandkopfes 7 und gegebenenfalls einer neuen Erfassung des zugehörigen Abstandes x vom Walzgerüst 2a. In diesem Fall gibt der Bandlageregler 10 stets nur den als nächstes auszugebenden Stellbefehl $u_0$ aus. Die nachfolgenden Stellbefehle $u_1$, $u_2$ usw. werden mit der neuen Ermittlung von Stellbefehlen $u_k$ ungültig. Es ist jedoch auch möglich, dass - beispielsweise aufgrund von Dampf oder Staub - während mancher Arbeitstakte T die Erfassung nicht möglich ist. Auch ist es möglich, dass der Bandkopf 7 aus einem Erfassungsbereich, innerhalb dessen die Erfassung der seitlichen Lage y des Bandkopfes 7 möglich ist, ausläuft. In diesen Fällen werden über den als nächstes auszugebenden Stellbefehl $u_0$ hinaus auch die nachfolgenden Stellbefehle $u_1$, $u_2$ usw. ausgegeben, bis entweder alle Stellbefehle $u_k$ ausgegeben sind oder eine erneute Erfassung der seitlichen Lage y des Bandkopfes 7 möglich ist.

Zur Ermittlung der Stellbefehle $u_k$ muss der Bandlageregler 10, wie bereits erwähnt, ein Modell 13 der Regelstrecke implementieren. Das Modell 13 der Regelstrecke basiert auf folgendem Ansatz:

Man nehme an, der Bandkopf 7 befinde sich zu einem bestimmten Zeitpunkt an einem Ort P. Der Ort P weist die Koordinaten x, y auf. x ist der bereits erwähnte Abstand des Ortes P vom Walzgerüst 2a, y die bereits erwähnte seitliche Lage des Bandkopfes 7. Man nehme weiterhin an, das Metallband 1 laufe mit der Transportgeschwindigkeit v aus dem Walzgerüst 2a aus. In diesem Fall gelten für die Änderung des Ortes P die Beziehungen

$$\dot{x} = v - (\lambda 0 + \lambda 1 \cdot u) \cdot y \cdot v \qquad \text{und} \qquad (7)$$

$$\dot{y} = (\lambda 0 + \lambda 1 \cdot u) \cdot x \cdot v \qquad (8)$$

Hierbei ist u der jeweilige Stellbefehl. $\lambda 0$ ist eine durch das Metallband 1 als solches hervorgerufene Krümmung des Metallbandes 1. Ursachen für diese Krümmung können beispielsweise ein a priori im Metallband 1 vorhandener Dickenkeil und/oder ein a priori im Metallband 1 vorhandener Temperaturkeil sein. $\lambda 1$ charakterisiert eine Wirksamkeit des momentanen Stellbefehls u.

Diese Differenzialgleichungen beschreiben einen Kreisbogen mit überlagerter Bewegung in x-Richtung, auf dem der Ort P des Bandkopfes 7 entlanggeführt wird.

Zur Implementierung des Modells 13 im Bandlageregler 10 müssen Modifikationen der Gleichungen 7 und 8 vorgenommen werden. Insbesondere werden die Gleichungen 7 und 8 diskretisiert, so dass sich modifizierte Gleichungen ergeben, beispielsweise im Falle einer Euler-Diskretisierung die Gleichungen

$$x_{k+1} = x_k + v \cdot T - \left(\lambda 0_k + \lambda 1_k \cdot u_k\right) \cdot y_k \cdot v \cdot T \qquad \text{und} \qquad (9)$$

$$y_{k+1} = y_k + \left(\lambda 0_k + \lambda 1_k\right) \cdot x_k \cdot v \cdot T \qquad (10)$$

Weiterhin kann in guter Näherung Gleichung 9 durch nachstehende Gleichung 11 ersetzt werden

$$x_{k+1} = x_k + y \cdot T = x_0 + k \cdot v \cdot T \qquad (11)$$

Die Wirksamkeit $\lambda 1$ des jeweiligen Stellbefehls $u_k$ und auch die durch das Metallband 1 solches hervorgerufene Krümmung $\lambda 0$ des Metallbandes 1 sind in den Gleichungen 9 bis 11 als vom jeweils ausgegebenen Stellbefehl $u_k$

abhängig dargestellt. Genau genommen besteht diese Abhängigkeit nicht. Die Werte für die Wirksamkeit $\lambda1$ des jeweiligen Stellbefehls $u_k$ und die durch das Metallband 1 solches hervorgerufene Krümmung $\lambda0$ des Metallbandes 1 sind zunächst jedoch nicht bekannt. Sie können aber im Laufe der wiederholten Ausführung des Verfahrens nach und nach immer besser geschätzt werden. Dies wird später näher erläutert werden.

Die durch das Metallband 1 als solches hervorgerufene Krümmung $\lambda0$ des Metallbandes 1 wird anfänglich in der Regel als Null angenommen. Solange keine auf Messungen basierende Kenntnis über die Wirksamkeit $\lambda1$ des momentanen Stellbefehls $u_k$ besteht, ist es weiterhin möglich, anfänglich eine gute Schätzung der Wirksamkeit $\lambda1$ des jeweiligen Stellbefehls $u_k$ vorzunehmen. Insbesondere kann die Wirksamkeit A1 des momentanen Stellbefehls $u_k$ anfänglich anhand der Beziehung

$$\lambda1 = \frac{2}{L \cdot (s1 + s2)} \qquad (3)$$

ermittelt werden. Hierbei ist (vergleiche FIG 4) L ein Abstand der bedienseitigen Verstelleinrichtung 11 von der antriebsseitigen Verstelleinrichtung 12. s1 und s2 sind die mittels der Verstelleinrichtungen 11 und 12 eingestellten jeweiligen Walzspalte.

Alternativ kann die Wirksamkeit $\lambda1$ des jeweiligen Stellbefehls $u_k$ anfänglich anhand der Beziehung

$$\lambda1 = \frac{2}{L \cdot (h1 + h2)} \qquad (4)$$

ermittelt werden. Hierbei sind h1 und h2 die bedienseitige und die antriebsseitige Dicke des Metallbandes 1.

Alternativ kann die Wirksamkeit $\lambda1$ des jeweiligen Stellbefehls $u_k$ anfänglich anhand der Beziehung

$$\lambda1 = \frac{v'}{\eta^2 \cdot d \cdot v} \qquad (5)$$

ermittelt werden. Hierbei sind - siehe FIG 2 - v' eine Geschwindigkeit des Metallbandes 1 einlaufseitig des Walzgerüsts 2a, $\eta$ eine beim Walzen des Metallbandes 1 in dem Walzgerüst 2a auftretende Stichabnahme und d eine Dicke des Metallbandes 1 einlaufseitig des Walzgerüsts 2a.

Im Rahmen der erfindungsgemäßen Vorgehensweise wird die Transportgeschwindigkeit v, mit der das Metallband 1 aus dem Walzgerüst 2a ausläuft, in der Regel messtechnisch erfasst. Die Erfassung kann direkt oder indirekt sein. Eine indirekte Erfassung ist beispielsweise die Erfassung der Umfangsgeschwindigkeit der Arbeitswalzen 3 des Walzgerüsts 2a nebst Berücksichtigung der Voreilung. Alternativ zur Berücksichtigung der Transportgeschwindigkeit v als solcher kann auch deren Sollwert verwendet werden.

Bezüglich der Dicken h1, h2 des Metallbandes 1 sind verschiedene Vorgehensweisen möglich. So ist es beispielsweise möglich, dass die Dicken h1, h2 messtechnisch erfasst werden. Alternativ ist es möglich, dass diese Werte der Steuereinrichtung 4 anderweitig bekannt ist, beispielsweise über Sollwertvorgaben oder einen Stichplan. Auch kann anstelle der einzelnen Dicken h1, h2 deren Mittelwert verwendet werden.

Das obenstehend erläuterte Verfahren arbeitet bereits sehr gut. Es kann jedoch noch weiter verbessert werden. Insbesondere ist es entsprechend der Darstellung in FIG 5 möglich, dass der Bandlageregler 10 bei der Ermittlung der Stellbefehle $u_k$ als zusätzliche Randbedingung berücksichtigt, dass die Abweichung der seitlichen Lage y des Bandkopfes 7 von der Solllage y* am Ende des Prädiktionshorizontes PH innerhalb einer zulässigen Endabweichung ynmax liegt. Die zulässige Endabweichung ynmax kann sehr klein gewählt werden. Insbesondere kann sie nahezu Null sein.

Ebenso ist es entsprechend der Darstellung in FIG 5 möglich, dass der Bandlageregler 10 bei der Ermittlung der Stellbefehle $u_k$ als zusätzliche Randbedingung berücksichtigt, dass eine Änderung der seitlichen Lage y des Bandkopfes 7 am Ende des Prädiktionshorizontes PH innerhalb einer zulässigen Endänderung $\delta$ynmax liegt.

Prinzipiell ist es ausreichend, dass das Betriebsverfahren von dem Bandlageregler 10 während des Auslaufens des Bandkopfes 7 aus dem Walzgerüst 2a nur einmal ausgeführt wird, dass also die Lage y des Bandkopfes 7 nur einmal punktuell erfasst und vom Bandlageregler 10 entgegengenommen wird. Dies gilt insbesondere dann, wenn der Prädiktionshorizont PH sich bis zum Einlaufen des Bandkopfes 7 in die nachgeordnete Einrichtung 2b erstreckt. Es ist jedoch alternativ möglich, das Verfahren wiederholt auszuführen.

Vorzugsweise kann die Lage y des Bandkopfes 7 mittels der Erfassungseinrichtung 8 in einem flächigen Bereich 14 erfasst werden. Beispielsweise ist eine derartige Erfassung möglich, wenn die Erfassungseinrichtung 8 als Kamera ausgebildet ist. Der flächige Bereich 14 weist in Transportrichtung A vom Walzgerüst 2a zur nachgeordneten Einrichtung 2b gesehen eine Erstreckung auf. Die Erstreckung beträgt vorzugsweise mindestens 20 % eines Abstands des Walzgerüsts 2a von der nachgeordneten Einrichtung 2b. Beispielsweise weisen die Walzgerüste 2 einer mehrgerüstigen Walzstraße (genauer: deren Walzspalte) einen Abstand voneinander auf, der üblicherweise zwischen 5 m und 9 m liegt, beispielsweise bei ca. 5,5 m. Es sind Kameras bekannt, mittels derer bei geeigneter Positionierung relativ zum Walzgerüst 2a ein Erfassungsbereich von ca. 1,60 m x 2,40 m erfassbar ist. Eine Ortsauflösung derartiger Kameras in Transportrichtung A liegt üblicherweise im Bereich weniger mm, beispielsweise bei ca. 1 mm bis ca. 5 mm. Eine Ortsauflösung quer zur Transportrichtung A liegt üblicherweise im Millimeterbereich. Je nach Orientierung der Kamera ist bei einem angenommenen Abstand der Walzgerüste 2 voneinander von 5,5 m eine Erfassung über gut 29 % bis knapp 44 % des Abstands der Walzgerüste 2 voneinander möglich. Eventuell können auch mehrere Kameras nebeneinander und/oder hintereinander angeordnet werden. Dadurch kann der flächige Bereich 14 noch größer sein.

In einem derartigen Fall kann zum einen das Verfahren wiederholt ausgeführt werden, solange der Bandkopf 7 sich innerhalb des flächigen Bereichs 14 befindet. Mit jeder neuen Ausführung werden die zuvor ermittelten Stellbefehle $u_k$ jedoch ungültig. Nur die zuletzt ermittelten Stellbefehle $u_k$ sind gültig.

Solange der Bandkopf 7 sich innerhalb des flächigen Bereichs 14 befindet, wird daher (zumindest in der Regel) jeweils nur der für den unmittelbar nächsten Zeitpunkt ermittelte Stellbefehl $u_0$ ausgegeben. Eine Ausnahme gilt jedoch, wenn - beispielsweise durch Staub oder Wasserdampf - auch innerhalb des flächigen Bereichs 14 im Einzelfall eine Erfassung der seitlichen Lage y des Bandkopfes 7 nicht zuverlässig möglich ist. In diesem Fall kann durch den Bandlageregler 10 jedoch trotz derartiger Störungen bei der Erfassung der Lage y des Bandkopfes 7 eine zuverlässige Regelung erfolgen. Insbesondere werden in diesem Fall vom Bandlageregler 10 auch die nachfolgenden Stellbefehle $u_1$, $u_2$ usw. ausgegeben.

Die wiederholte Erfassung der Lage y des Bandkopfes 7 kann weiterhin dazu genutzt werden, die durch das Metallband 1 als solches hervorgerufene Krümmung λ0 des Metallbandes 1 und die Wirksamkeit λ1 der Stellbefehle $u_k$, mit denen das Walzgerüst 2a beaufschlagt wird, anhand eines Vergleichs der neu erfassten seitlichen Lage y des Bandkopfes 7 mit einer erwarteten seitlichen Lage $y_k$ des Bandkopfes 7 nachzuführen. Die erwartete seitliche Lage $y_k$ des Bandkopfes 7 ist hierbei diejenige Lage, die im Rahmen der Ermittlung der Stellbefehle $u_k$ nach demjenigen Stellbefehl $u_k$ erwartet wird, mit dem das Walzgerüst 2a zuletzt beaufschlagt wurde.

Vorzugsweise verwendet der Bandlageregler 10 zum Nachführen der durch das Metallband 1 als solches hervorgerufenen Krümmung λ0 des Metallbandes 1 und der Wirksamkeit λ1 der Stellbefehle $u_k$ einen Kalman-Filter. Dies wird nachstehend näher erläutert.

Man setzt zunächst einen Vektor $X_k$ an, in den die Werte $λ0_k$, $λ1_k$ und $y_k$ eingehen:

$$X_k = \begin{pmatrix} λ0_k \\ λ1_k \\ y_k \end{pmatrix} \tag{12}$$

Dann gilt die Beziehung

$$X_{k+1} = D \cdot X_k \tag{13}$$

Hierbei ist $D_k$ die abbildende Matrix, mittels derer der Zustand $X_k$ in den Zustand $X_{k+1}$ abgebildet wird. Für die Matrix $D_k$ gilt:

$$D = \begin{pmatrix} 1 & 0 & 0 \\ 0 & 1 & 0 \\ vTx_k & vTx_k u_k & 1 \end{pmatrix} \tag{14}$$

Weiterhin wird ein Vektor c angesetzt, mittels dessen durch die Beziehung

$$y_k = c^T X_k \tag{15}$$

aus dem Vektor $X_k$ die Komponente $y_k$ extrahiert werden kann.

Demzufolge hat der Vektor c die Form

$$c = \begin{pmatrix} 0 \\ 0 \\ 1 \end{pmatrix} \qquad (16)$$

Die durch das Metallband 1 als solches hervorgerufene Krümmung λ0 des Metallbandes 1 und die Wirksamkeit λ1 der Stellbefehle $u_k$ können nicht direkt beobachtet werden. Um die durch das Metallband 1 als solches hervorgerufene Krümmung λ0 des Metallbandes 1 und die Wirksamkeit λ1 der Stellbefehle $u_k$ dennoch ermitteln zu können, wird ein Kalman-Filter angesetzt. Die Filtergleichungen des Kalman-Filters lauten:

$$V_{k+1} = D_k \cdot M_k \cdot D_k^T \cdot c \cdot r^{-1} \qquad (17)$$

$$X_{k+1} = X_k + V_k \cdot \left( y - c^T D_k \cdot X_k \right) \qquad (18)$$

$$M_{k+1} = \alpha \left( I - V_k \cdot c^T \right) D_k P_k D_k^T \qquad (19)$$

Hierbei sind (unter Vernachlässigung des Indexes k bzw. k+1)

- V ein Vektor, der eine Kalman-Verstärkung definiert,
- M eine 3x3-Kovarianzmatrix,
- r eine reelle, positive Zahl,
- α eine reelle, positive Zahl,
- I die Einheitsmatrix.

Der Anfangswert $V_0$ für die Kalman-Verstärkung V kann beispielsweise dadurch ermittelt werden, dass bei der erstmaligen Lösung der Gleichungen 17 bis 19 Gleichung 17 vor den Gleichungen 18 und 19 gelöst wird und der sich ergebende Wert als Anfangswert $V_0$ verwendet wird. Der Anfangswert $P_0$ für die Kovarianzmatrix P kann beispielsweise die Einheitsmatrix sein. r hat die Bedeutung eines Messrauschens. r wird von einem Bediener der Walzstraße intellektuell geschätzt und der Steuereinrichtung 4 vorgegeben. Der Zahlenwert von r liegt üblicherweise bei Werten zwischen 0,1 mm und 3 mm. α hat die Bedeutung eines Vergesslichkeitsfaktors. Der Zahlenwert von α liegt üblicherweise geringfügig oberhalb von 1, beispielsweise bei Werten zwischen 1,00 und 1,01.

Um den Vektor $X_k$ unter Anwendung des Kalman-Filters nachzuführen, wird zunächst durch wiederholte Anwendung von Gleichung 13 der Vektor $X_k$ für denjenigen Wert des Indexes k ermittelt, mit dessen korrespondierender Stellgröße $u_k$ das Walzgerüst 2a unmittelbar vor dem Erfassen der seitlichen Lage y des Bandkopfes 7 zuletzt beaufschlagt wurde. Dann werden die Gleichungen 17 bis 19 einmal gerechnet. Hierbei werden werden die nunmehr gültigen Werte für die abbildende Matrix $D_k$, den Vektor $X_k$ und die erfasste Lage y des Bandkopfes 7 verwendet. Dadurch werden die zuletzt gültigen Werte $V_k$, $P_0$ für die Kalman-Verstärkung V und die Kovarianzmatrix P sowie der Vektor $X_k$ nachgeführt. Somit können nach und nach die anfänglichen Schätzungen für die durch das Metallband 1 als solches hervorgerufene Krümmung λ0 des Metallbandes 1 und die Wirksamkeit λ1 der Stellbefehle $u_k$ verbessert werden.

Auch im Falle der wiederholten Ausführung des Verfahrens ist es möglich, dass der Prädiktionshorizont PH sich bis zum Einlaufen des Bandkopfes 7 in die nachgeordnete Einrichtung 2b erstreckt. In diesem Fall wird der Prädiktionshorizont PH, soweit erforderlich, bei jeder Ausführung des Verfahrens angepasst, so dass er sich zwar bis zum Einlaufen des Bandkopfes 7 in die nachgeordnete Einrichtung 2b erstreckt, nicht aber darüber hinaus.

Die vorliegende Erfindung weist viele Vorteile auf. So werden beispielsweise die Steuerleute entlastet. Weiterhin wird der Bandkopf 7 und damit das ganze Metallband 1 genauer geführt. Oftmals kann sogar das Einfädeln in ein dem Walzgerüst 2a nachgeordnetes Walzgerüst 2 vollautomatisch erfolgen. Der Bandlageregler 10 ist auf einfache Weise optimal auslegbar. Bei Anwendung der erfindungsgemäßen Betriebsweise bei allen Walzgerüsten 2 der Walzstraße ist eine optimale Führung des Bandkopfes 7 durch die gesamte Walzstraße möglich. Die erfindungsgemäße Vorgehensweise ist auch bei eingehausten Walzstraßen, wie sie zukünftig mehr und mehr Verwendung finden, ohne weiteres einsetzbar. Das Betriebspersonal wird entlastet, die Qualität und die Ausbringung werden erhöht. Die Geschwindigkeit, mit der sich ein vorhandener Dickenkeil im Metallband 1 ändert, kann begrenzt werden. Unzulässige Betriebszustände - insbesondere Betriebszustände, die zu einem Hochgeher führen könnten, - können zuverlässig vermieden werden. Durch die vorliegende Erfindung kann insbesondere bei eingehausten Walzstraßen, die zukünftig immer bedeutsamer werden, eine zuverlässige Führung des Bandkopfes 7 gewährleistet werden.

Bezugszeichenliste

| 1 | Metallband |
| --- | --- |
| 2, 2a | Walzgerüste |
| 2b | nachgeordnete Einrichtung |
| 3 | Arbeitswalzen |
| 4 | Steuereinrichtung |
| 5 | Computerprogramm |
| 6 | Maschinencode |
| 7 | Bandkopf |
| 8 | Erfassungseinrichtung |
| 9 | (nicht vergeben) |
| 10 | Bandlageregler |
| 11, 12 | Verstelleinrichtungen |
| 13 | Modell |
| 14 | flächiger Bereich |

| A | Transportrichtung |
| --- | --- |
| $c$, $X_k$ | Vektoren |
| d | einlaufseitige Dicke des Metallbandes |
| $D_k$ | abbildende Matrix |
| h1, h2 | Dicken |
| I | Einheitsmatrix |
| K | Gütefunktion |
| k | Index |
| L | Abstand der Verstelleinrichtungen voneinander |
| M | Kovarianzmatrix |
| n | Zahlenwert |
| P | Ort |
| PH | Prädiktionshorizont |
| $P_0$, $V_0$ | Anfangswerte |
| r | reelle Zahl |
| s1, s2 | Walzspalte |
| T | Arbeitstakt |
| T0 | Zeit |
| u, $u_k$ | Stellbefehle |
| umax | maximaler Walzspaltkeil |
| V | Kalman-Verstärkung |
| v | Transportgeschwindigkeit |
| v' | einlaufseitige Geschwindigkeit des Metallbandes |
| x | Abstand |
| y | seitliche Lage |
| $y_k$ | erwartete Lagen |
| ymax | maximale Abweichung |
| ynmax | zulässige Minimalabweichung |
| y* | Solllage |

| $\alpha$ | reelle Zahl |
| --- | --- |
| $\alpha1$ bis $\alpha3$ | Wichtungsfaktoren |
| $\delta$umax | maximale Änderung |
| $\delta$ynmax | zulässige Minimaländerung |
| $\varepsilon$ | Strafterm |
| $\eta$ | Stichabnahme |
| $\lambda0$, $\lambda0_k$ | das Metallband 1 hervorgerufene Krümmung |
| $\lambda1$, $\lambda1_k$ | Wirksamkeit der Stellbefehle |

**Patentansprüche**

1.  Betriebsverfahren für eine Walzstraße, in der ein Metallband (1) gewalzt wird,

    - wobei die Walzstraße mindestens ein Walzgerüst (2a) und eine dem Walzgerüst (2a) nachgeordnete Einrichtung (2b) aufweist,
    - wobei während des Auslaufens des Bandkopfes (7) aus dem Walzgerüst (2a) ein Bandlageregler (10) eine mittels einer Erfassungseinrichtung (8) an mindestens einem zwischen dem Walzgerüst (2a) und der nachgeordneten Einrichtung (8) liegenden Ort (P) erfasste seitliche Lage (y) des Bandkopfes (7) entgegennimmt,

    **dadurch gekennzeichnet,**

    - **dass** der Bandlageregler (10) als modellprädiktiver Regler ausgebildet ist, der basierend auf der entgegengenommenen seitlichen Lage (y) des Bandkopfes (7) eine Sequenz von mit einem Arbeitstakt (T) nacheinander auszugebenden Stellbefehlen ($u_k$) ermittelt, mittels derer jeweils ein Walzspaltkeil eingestellt wird,
    - **dass** die Anzahl an Stellbefehlen ($u_k$) in Verbindung mit dem Arbeitstakt (T) einen Prädiktionshorizont (PH) des Bandlagereglers (10) definiert, und
    - **dass** der Bandlageregler (10) das Walzgerüst (2a) zumindest mit dem als nächstes auszugebenden Stellbefehl ($u_0$) beaufschlagt,
    - **dass** der Bandlageregler (10) zur Ermittlung der Sequenz von auszugebenden Stellbefehlen ($u_k$)

        -- zunächst eine Sequenz von vorläufigen Stellbefehlen ($u_k$) ansetzt, mittels derer jeweils ein Walzspaltkeil eingestellt wird,
        -- ausgehend von der entgegengenommenen seitlichen Lage (y) des Bandkopfes (7) anhand eines Modells der Walzstraße für die angesetzten Stellbefehle ($u_k$) jeweils den bei einer Ausführung der angesetzten Stellbefehle ($u_k$) bis zum jeweils betrachteten Stellbefehl ($u_k$) erwarteten Abstand ($x_k$) des Bandkopfes (7) vom Walzgerüst (2a) und die bei der Ausführung der angesetzten Stellbefehle ($u_k$) bis zum jeweils betrachteten Stellbefehl ($u_k$) erwartete seitliche Lage ($y_k$) des Bandkopfes (7) ermittelt und
        -- die angesetzten Stellbefehle ($u_k$) gemäß einem Optimierungskriterium optimiert und so die auszugebenden Stellbefehle ($u_k$) ermittelt und

    - **dass** der Bandlageregler (10) die Stellbefehle ($u_k$) im Rahmen der Optimierung derart ermittelt, dass innerhalb des Prädiktionshorizontes (PH) der Walzspaltkeil einen vorgegebenen maximalen Walzspaltkeil (umax) nicht überschreitet, die Abweichung der seitlichen Lage (y) des Bandkopfes (7) von einer Solllage (y*) eine vorgegebene maximale Abweichung (ymax) nicht überschreitet und eine Gütefunktion (K) der Form

$$ K = \alpha1 \cdot \varepsilon + \alpha2 \cdot \sum_{k=1}^{n} \left\| u_k - u_{k-1} \right\| + \alpha3 \cdot \sum_{k=1}^{n} \left\| y - y_k \right\| $$

    minimiert wird, wobei K die Gütefunktion ist, $\alpha1$ bis $\alpha3$ nicht negative, reelle Wichtungsfaktoren sind, wobei von den Wichtungsfaktoren $\alpha1$ und $\alpha2$ mindestens einer größer als 0 ist, wobei $u_k$ der k-te Stellbefehl ist und $\varepsilon$ ein Strafterm ist, mittels dessen ein Überschreiten einer vorgegebenen maximalen Änderung ($\delta$umax) des Walzspaltkeils von Stellbefehl ($u_k$) zu Stellbefehl ($u_k$) bestraft wird.

2.  Betriebsverfahren nach Anspruch 1,
    **dadurch gekennzeichnet,**
    **dass** der Bandlageregler (10) bei der Ermittlung der Stellbefehle ($u_k$) als zusätzliche Randbedingung berücksichtigt, dass die Abweichung der seitlichen Lage (y) des Bandkopfes (7) von der Solllage (y*) am Ende des Prädiktionshorizontes (PH) innerhalb einer zulässigen Endabweichung (ynmax) liegt.

3.  Betriebsverfahren nach Anspruch 1 oder 2,
    **dadurch gekennzeichnet,**
    **dass** der Bandlageregler (10) bei der Ermittlung der Stellbefehle ($u_k$) als zusätzliche Randbedingung berücksichtigt, dass eine Änderung der seitlichen Lage (y) des Bandkopfes (7) am Ende des Prädiktionshorizontes (PH) innerhalb einer zulässigen Endänderung ($\delta$ynmax) liegt.

4.  Betriebsverfahren nach einem der obigen Ansprüche,

**dadurch gekennzeichnet,**

**dass** der Bandlageregler (10) das Walzgerüst (2a) nacheinander mit dem Arbeitstakt (T) auch mit den weiteren auszugebenden Stellbefehlen ($u_k$) beaufschlagt, bis entweder alle auszugebenden Stellbefehle ($u_k$) ausgegeben sind oder der Bandlageregler (10), basierend auf einem erneuten Entgegennehmen der seitlichen Lage (y) des Bandkopfes (7), erneut eine Sequenz von Stellbefehlen ($u_k$) ermittelt.

5. Betriebsverfahren nach einem der obigen Ansprüche,
**dadurch gekennzeichnet,**
**dass** der Prädiktionshorizont (PH) sich bis zum Fördern des Bandkopfes (7) zur nachgeordneten Einrichtung (2b) erstreckt.

6. Betriebsverfahren nach einem der obigen Ansprüche,
**dadurch gekennzeichnet,**
**dass** es während des Auslaufens des Bandkopfes (7) aus dem Walzgerüst (2a) wiederholt ausgeführt wird und dass nur die zuletzt ermittelten Stellbefehle ($u_k$) gültig sind.

7. Computerprogramm, das Maschinencode (6) umfasst, der von einer Steuereinrichtung (4) für eine Walzstraße abarbeitbar ist, wobei die Abarbeitung des Maschinencodes (6) durch die Steuereinrichtung (4) bewirkt, dass die Steuereinrichtung (4) die Walzstraße gemäß einem Betriebsverfahren nach einem der obigen Ansprüche betreibt.

8. Steuereinrichtung für eine Walzstraße, wobei die Steuereinrichtung mit einem Computerprogramm (5) nach Anspruch 7 programmiert ist, so dass die Steuereinrichtung die Walzstra-ße gemäß einem Betriebsverfahren nach einem der Ansprüche 1 bis 6 betreibt.

9. Walzstraße zum Walzen eines Metallbandes (1),

- wobei die Walzstraße zumindest ein Walzgerüst (2a) und eine dem Walzgerüst (2a) nachgeordnete Einrichtung (2b) aufweist,
- wobei die Walzstraße eine Erfassungseinrichtung (8) aufweist, von der während des Auslaufens eines Bandkopfes (7) des Metallbandes (1) aus dem Walzgerüst (2a) an mindestens einem zwischen dem Walzgerüst (2a) und der nachgeordneten Einrichtung (8) liegenden Ort (P) eine seitliche Lage (y) des Bandkopfes (7) erfassbar ist,
- wobei die Walzstraße eine Steuereinrichtung (4) aufweist, welche die Walzstraße gemäß einem Betriebsverfahren nach einem der Ansprüche 1 bis 6 betreibt.

**Claims**

1. Operating method for a roll train in which a metal strip (1) is rolled,

- the roll train comprising at least one roll stand (2a) and a device (2b) disposed downstream of the roll stand (2a),
- a strip position controller (10) receiving a lateral position (y) of the strip head (7) which is captured at at least one location (P) located between the roll stand (2a) and the downstream device (8) by means of a capture device (8) while the strip head (7) runs out of the roll stand (2a),

**characterized**

- **in that** the strip position controller (10) is designed as a model predictive controller which on the basis of the received lateral position (y) of the strip head (7) determines a sequence of control commands ($u_k$) which are to be successively output with a work cycle (T) and are used to set a respective roll gap wedge,
- **in that** the number of control commands ($u_k$) in conjunction with the work cycle (T) defines a prediction horizon (PH) of the strip position controller (10), and
- **in that** at least the next control command ($u_k$) to be output is applied to the roll stand (2a) by the strip position controller (10),
- **in that** for the purpose of determining the sequence of control commands ($u_k$) to be output the strip position controller (10)

-- initially formulates a sequence of preliminary control commands ($u_k$) used to set a roll gap wedge in each case,
-- uses a model of the roll train and the received lateral position (y) of the strip head (7) as a starting point for in each case determining, for the formulated control commands ($u_k$), the expected distance ($x_k$) of the strip head (7) from the roll stand (2a) when carrying out the formulated control commands ($u_k$) up to the respectively considered control command ($u_k$) and the expected lateral position ($y_k$) of the strip head (7) when carrying out the formulated control commands ($u_k$) up to the respectively considered control command ($u_k$), and
-- optimizes the formulated control commands ($u_k$) according to an optimization criterion and thus determines the control commands ($u_k$) to be output, and

- **in that** the strip position controller (10) determines the control commands ($u_k$) within the scope of the optimization such that, within the prediction horizon (PH), the roll gap wedge does not exceed a specified maximum roll gap wedge (umax), the deviation of the lateral position (y) of the strip head (7) does not exceed a specified maximum deviation (ymax) from a target position (y*) and a quality function (K) of the following form is minimized:

$$K = \alpha 1 \cdot \varepsilon + \alpha 2 \cdot \sum_{k=1}^{n} \|u_k - u_{k-1}\| + \alpha 3 \cdot \sum_{k=1}^{n} \|y - y_k\|,$$

where K is the quality function, $\alpha 1$ to $\alpha 3$ are non-negative, real weighting factors, with at least one of the weighting factors $\alpha 1$ and $\alpha 2$ being greater than 0, where $u_k$ is the k-th control command and $\varepsilon$ is a penalty term, the latter penalizing the case of a specified maximum change ($\delta$umax) of the roll gap wedge from control command ($u_k$) to control command ($u_k$) being exceeded.

2. Operating method according to Claim 1,
   **characterized**
   **in that** an additional boundary condition considered by the strip position controller (10) when determining the control commands ($u_k$) is that the deviation of the lateral position (y) of the strip head (7) from the target position (y*) is within an admissible end deviation (ynmax) at the end of the prediction horizon (PH).

3. Operating method according to Claim 1 or 2,
   **characterized**
   **in that** an additional boundary condition considered by the strip position controller (10) when determining the control commands ($u_k$) is that a change in the lateral position (y) of the strip head (7) is within an admissible end change ($\delta$ynmax) at the end of the prediction horizon (PH).

4. Operating method according to any of the preceding claims,
   **characterized**
   **in that** the further control commands ($u_k$) to be output are also successively applied with the work cycle (T) to the roll stand (2a) by the strip position controller (10), either until all control commands ($u_k$) to be output are output or the strip position controller (10) determines a sequence of control commands ($u_k$) afresh on the basis of a renewed reception of the lateral position (y) of the strip head (7).

5. Operating method according to any of the preceding claims,
   **characterized**
   **in that** the prediction horizon (PH) extends up to the conveying of the strip head (7) to the downstream device (2b).

6. Operating method according to any of the preceding claims,
   **characterized**
   **in that** said operating method is carried out repeatedly while the strip head (7) runs out of the roll stand (2a) and in that only the most recently determined control commands ($u_k$) are valid.

7. Computer program comprising machine code (6) which can be executed by a control device (4) for a roll train, execution of the machine code (6) by the control device (4) causing the control device (4) to operate the roll train in accordance with an operating method according to any of the preceding claims.

8. Control device for a roll train, the control device being programmed by a computer program (5) according to Claim 7 such that the control device operates the roll train in accordance with an operating method according to any of Claims 1 to 6.

9. Roll train for rolling a metal strip (1),

- the roll train comprising at least one roll stand (2a) and a device (2b) disposed downstream of the roll stand (2a),
- the roll train comprising a capture device (8), the latter capable of capturing a lateral position (y) of a strip head (7) of the metal strip (1) at at least one location (P) located between the roll stand (2a) and the downstream device (8) while the strip head (7) runs out of the roll stand (2a),
- the roll train comprising a control device (4) which operates the roll train in accordance with an operating method according to any of Claims 1 to 6.

**Revendications**

1. Procédé de fonctionnement d'un train de laminage dans lequel une bande métallique (1) est laminée,

- dans lequel le train de laminage présente au moins une cage de laminoir (2a) et un dispositif (2b) disposé en aval de la cage de laminoir (2a),
- dans lequel, lors de la sortie de la tête de bande (7) de la cage de laminoir (2a), un régulateur de position de bande (10) reçoit une position latérale (y) de la tête de bande (7), détectée au moyen d'un dispositif de détection (8) en au moins un endroit (P) situé entre la cage de laminoir (2a) et le dispositif (8) en aval,

**caractérisé en ce que**

- le régulateur de position de bande (10) est réalisé sous la forme d'un régulateur prédictif de modèle qui, sur la base de la position latérale (y) de la tête de bande (7) reçue, détermine une séquence d'instructions de positionnement ($u_k$) à émettre successivement avec une cadence de travail (T), au moyen desquelles une fente de laminage en V est définie,
- le nombre d'instructions de positionnement($u_k$) en liaison avec la cadence de travail (T) définit un horizon de prédiction (PH) du régulateur de position du support de bande (10), et
- le régulateur de position du support de bande (10) sollicite la cage de laminoir (2a) au moins avec la prochaine commande de positionnement ($u_0$) à émettre,
- le régulateur de position du support de bande (10) pour déterminer la séquence d'instructions de positionnement à émettre ($u_k$)

-- applique d'abord une séquence d'instructions provisoires de positionnement ($u_k$), au moyen desquelles une fente de laminage en V est définie à chaque fois,
-- à partir de la position latérale (y) de la tête de bande (7) reçue, à l'aide d'un modèle du train de laminage, pour les instructions de positionnement($u_k$) appliquées, détermine la distance ($x_k$) de la tête de bande (7) à la cage de laminoir (2a) attendue lors de l'exécution des commandes de positionnement appliquées ($u_k$) jusqu'à la commande de positionnement ($u_k$) respective considérée et la position latérale ($y_k$) de la tête de bande (7) attendue lors de l'exécution des commandes de positionnement appliquées ($u_k$) jusqu'à la commande de positionnement ($u_k$) respective considérée et
-- optimise les instructions de positionnement appliquées ($u_k$) selon un critère d'optimisation et détermine ainsi les instructions de positionnement à émettre ($u_k$) et

- **en ce que** le régulateur de position du support de bande (10) détermine les instructions de positionnement ($u_k$) dans le cadre de l'optimisation de telle sorte que, à l'intérieur de l'horizon de prédiction (PH), la fente de laminage ne dépasse pas la fente de laminage en V maximale prédéfinie (umax), que l'écart de la position latérale (y) de la tête de bande (7) par rapport à une position de consigne (y*) ne dépasse pas un écart maximal prédéfini (ymax) et qu'une fonction de qualité (K) de forme

$$K = \alpha 1 \cdot \varepsilon + \alpha 2 \cdot \sum_{k=1}^{n} \|u_k - u_{k-1}\| + \alpha 3 \cdot \sum_{k=1}^{n} \|y - y_k\|$$

où K est la fonction de qualité, $\alpha1$ à $\alpha3$ sont des facteurs de pondération réels non négatifs, au moins l'un des facteurs de pondération $\alpha1$ et $\alpha2$ est supérieur à 0, $u_k$ est la k-ième commande de positionnement et $\varepsilon$ est un terme de pénalité au moyen duquel un dépassement d'une variation maximale prédéterminée ($\delta$umax) de la fente de laminage en V entre la commande de positionnement ($u_k$) et la commande de positionnement ($u_k$) est pénalisé.

2. Procédé de fonctionnement selon la revendication 1,
   **caractérisé en ce que**
   le régulateur de position du support de bande (10) tient compte, lors de la détermination des instructions de positionnement ($u_k$), comme condition cadre supplémentaire, du fait que l'écart de la position latérale (y) de la tête de bande (7) par rapport à la position de consigne (y*) à la fin de l'horizon de prédiction (PH) se situe à l'intérieur d'un écart final admissible (ynmax).

3. Procédé de fonctionnement selon la revendication 1 ou 2,
   **caractérisé en ce que**
   le régulateur de position du support de bande (10) tient compte, lors de la détermination des instructions de positionnement ($u_k$), comme condition cadre supplémentaire, du fait qu'une modification de la position latérale (y) de la tête de bande (7) à la fin de l'horizon de prédiction (PH) se situe à l'intérieur d'une modification finale admissible ($\delta$ynmax).

4. Procédé de fonctionnement selon l'une des revendications ci-dessus,
   **caractérisé en ce que**
   le régulateur de position du support de bande (10) sollicite la cage de laminoir (2a) successivement avec la cadence de travail (T) également avec les autres instructions de positionnement ($u_k$) à émettre, jusqu'à ce que soit toutes les instructions de positionnement ($u_k$) à émettre sont émises, soit le régulateur de position du support de bande (10) détermine à nouveau une séquence d'instructions de positionnement ($u_k$), sur la base d'une nouvelle réception de la position latérale (y) de la tête de bande (7).

5. Procédé de fonctionnement selon l'une des revendications ci-dessus,
   **caractérisé en ce que**
   l'horizon de prédiction (PH) s'étend jusqu'au transport de la tête de bande (7) vers le dispositif (2b) en aval.

6. Procédé de fonctionnement selon l'une des revendications ci-dessus,
   **caractérisé en ce que**
   il est exécuté de manière répétée pendant la sortie de la tête de bande (7) de la cage de laminoir (2a) et **en ce que** seules les instructions de positionnement ($u_k$) déterminées en dernier lieu sont valables.

7. Logiciel informatique comprenant un code machine (6) qui peut être traité par un dispositif de commande (4) pour un train de laminage, le traitement du code machine (6) par le dispositif de commande (4) amenant le dispositif de commande (4) à faire fonctionner le train de laminage selon un procédé de fonctionnement selon l'une des revendications ci-dessus.

8. Dispositif de commande pour un train de laminage, dans lequel le dispositif de commande est programmé avec un logiciel informatique (5) selon la revendication 7, de sorte que le dispositif de commande fait fonctionner le train de laminage selon un procédé de fonctionnement selon l'une quelconque des revendications 1 à 6.

9. Train de laminage pour laminer une bande métallique (1),

   - dans lequel le train de laminage présente au moins une cage de laminoir (2a) et un dispositif (2b) disposé en aval de la cage de laminoir (2a),
   - dans lequel le train de laminage présente un dispositif de détection (8) par lequel, pendant la sortie d'une tête de bande (7) de la bande métallique (1) de la cage de laminoir (2a), une position latérale (y) de la tête de bande (7) peut être détectée en au moins un endroit (P) situé entre la cage de laminoir (2a) et le dispositif (8) placé en aval,
   - dans lequel le train de laminage comprend un dispositif de commande (4) qui fait fonctionner le train de laminage selon un procédé de fonctionnement selon l'une des revendications 1 à 6.

FIG 1

FIG 2

$$\eta = \frac{d'}{d}$$

FIG 3

FIG 4

# FIG 5

10

$$x_0 = x$$

$$y_0 = y$$

$$u_k \qquad\qquad ( \, k = 0, \dots, n\text{-}1 \, )$$

$$| \, u_k \, | \leq umax \qquad ( \, k = 0, \dots, n\text{-}1 \, )$$

$$| \, y_k - y^* \, | \leq ymax \qquad ( \, k = 1, \dots, n \, )$$

$$| \, u_k - u_{k\text{-}1} \, | \leq \delta umax + \varepsilon \qquad ( \, k = 1, \dots, n\text{-}1 \, )$$

$$| \, y_n - y^* \, | \leq ynmax$$

$$| \, y_n - y_{n\text{-}1} \, | \leq \delta ynmax$$

$$K = \alpha 1 \varepsilon + \alpha 2 \sum_{k=1}^{n} \| \, u_k - u_{k\text{-}1} \, \| + \alpha 3 \sum_{k=1}^{n} \| \, y - y_k \, \|$$

Inputs: y, x, y*, umax, ymax, δumax, ynmax, δynmax

Output: $u_k$

13

$$x_{k+1} = x_k + v{\cdot}T = x_0 + k{\cdot}v{\cdot}T$$

$$y_{k+1} = y_k + ( \, \lambda 0_k + \lambda 1_k{\cdot}u_k \, ){\cdot}(x_0 + k{\cdot}v{\cdot}T \, ){\cdot}v{\cdot}T$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19704337 B4
- JP 60148614 A
- DE 102005051053 A1
- DE 102014007381 A1
- WO 2005072886 A1
- US 20100269556 A1

**In der Beschreibung aufgeführte Nicht-Patentliteratur**

- Steering Control at Arcelor Eko Stahl finishing HSM. Steel Times International, Mai 2007
- **VON ARNO BARRY SAMUEL FERREIRA.** *Adaptive Fuzzy Logic Steering Controller for a Steckel Mill,* November 2005
- **VON Y. OKAMURA ; I. KOSHINO.** State Feedback Control of the Strip Steering for Aluminium Hot Rolling Mills. IFAC, 1996